# EUROPÄISCHE PATENTSCHRIFT

(11) **EP 1 245 382 B1**
(45) Veröffentlichungstag und Bekanntmachung des Hinweises auf die Patenterteilung: **14.06.2006**
(21) Anmeldenummer: 01130367.4
(22) Anmeldetag: 20.12.2001
(51) Int. Cl.: B32B 29/06, B44C 5/04, E04F 15/02, B32B 21/06

(54) **Laminatpaneel für Fussböden**
Laminated panel for floors
Panneau stratifié pour planchers

(30) Priorität: 28.03.2001 DE 10115567
(43) Veröffentlichungstag der Anmeldung: 02.10.2002
(73) Patentinhaber: Flooring Technologies Ltd., Portico Building Marina Street Pieta MSD 08 (MT)
(72) Erfinder: Hasch, Joachim, Dipl.-Holzwirt, 12055 Berlin (DE)
(74) Vertreter: Rehmann, Thorsten

(56) Entgegenhaltungen:
- EP-A- 0 956 933
- DE-A- 4 107 151
- US-A- 4 207 379
- US-A- 5 654 091

## Beschreibung

Die Erfindung betrifft ein Bodenpaneel mit einem Kern aus Holzwerkstoff, insbesondere HDF, einer auf der Oberseite des Kerns aufgebrachten Dekorschicht aus Papier und einem die Dekorschicht abdeckenden Overlay sowie einer auf der Unterseite des Kerns als Gegenzug aufgebrachten Unterschicht.

Solche Bodenpaneele sind beispielsweise aus der DE 197 35 189 A1 bekannt. Das auf die Dekorschicht aufgebrachte Overlay besteht aus Melamin mit einem hohen Anteil an Korund. Es dient als Deck- und Schutzschicht, insbesondere gegen Verschleiß. Nachteilig an den bekannten Bodenpaneelen ist, dass sie sich statisch aufladen können. Dadurch wird Staub angezogen. Das Wohlbefinden der einen Laminatboden betretenden Personen wird stark beeinträchtigt, wenn diese ebenfalls der elektrostatischen Aufladung unterliegen und es zu einer Entladung kommt.

Der Erfindung liegt die Aufgabe zugrunde, das bekannte Bodenpaneel so fortzubilden, dass die Möglichkeit der statischen Aufladung reduziert wird.

Zur Lösung der Aufgabe zeichnet sich ein gattungsgemäßes Paneel dadurch aus, dass auf die Dekorschicht eine Schicht aus einem polymeren Materialnämlich aus Polyanilin oder Polypyrrol aufgebracht ist. Mit dieser Ausbildung hat sich überraschenderweise gezeigt, dass eine elektrostatische Aufladung des Paneels nahezu ausgeschlossen ist.

Die Polymerschicht kann auf der Unterseite oder auf der Oberseite der Dekorschicht aufgebracht sein. Vorzugsweise wird sie auf der Unterseite aufgebracht.

Die Dicke der Polymerschicht beträgt vorzugsweise zwischen 15 µm und 250 µm. Insbesondere vorzugsweise zwischen 30 µm und 80 µm.

Des Weiteren liegt der Erfindung die Aufgabe zugrunde, ein Verfahren zur Beschichtung eines Dekorpapiers mit einer Polymerschicht zur Verwendung für ein erfindungsgemäßes Bodenpaneel anzugeben, wobei das Dekorpapier als Bahn im Durchlauf durch ein Becken mit Melamin oder Harnstoff beschichtet wird, daran anschließend einen Vortrockner und einen Nachtrockner durchläuft und abschließend geschnitten wird.

Erfindungsgemäß wird auf die Bahn Dekorpapier nach der Beschichtung mit Melamin oder Kunstharz und vor dem Einlauf in den Vortrockner das Polymer durch Walzen oder Sprühen aufgetragen.

Die vorstehend beschriebene Aufgabe kann auch dadurch gelöst werden, dass auf die Bahn Dekorpapier nach dem Auslauf aus dem Vortrockner und vor dem Einlauf in den Nachtrockner das Polymer durch Walzen oder Sprühen aufgetragen wird.

Sehr gute Ergebnisse haben sich eingestellt, wenn die Polymerschicht auf das nasse, frisch beharzte Papier noch vor dem Einlaufen in den Vortrockner aufgebracht wird.

Das so beschichtete Dekorpapier kann zur Herstellung der Laminatpaneele in bekannter Weise verwendet werden.

Mit Hilfe einer Zeichnung soll die Erfindung nachfolgend näher beschrieben werden. Es zeigt:

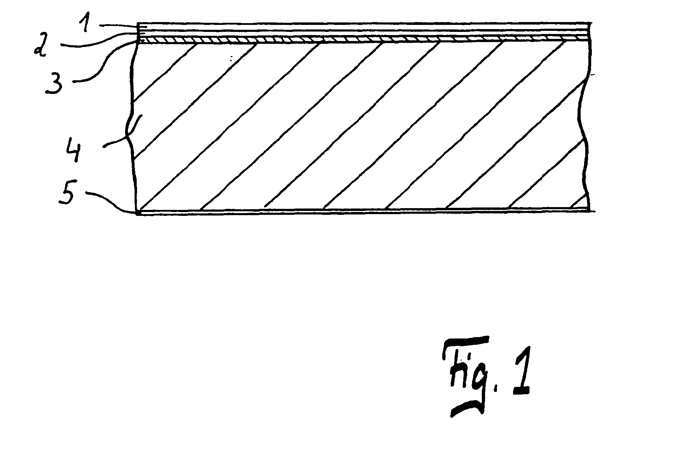

- Figur 1.: ein Bodenpaneel im Teilquerschnitt;
- Figur 2 -: die schematische Darstellung zur Beschichtung einer Papierbahn.

Das Bodenpaneel besteht aus einem Kern 4 aus einen Holzwerkstoff, insbesondere HDF (hochverdichtete Faserplatte) oder OSB (oriented strand board), auf deren Oberseite eine aus Papier bestehende Dekorschicht 2 und ein Overlay 1, das aus Melamin mit eingeschlossenen Korundkörnern besteht, aufgepresst ist. Auf der Unterseite und/oder der Oberseite der Dekorschicht 2 ist als Antistatikum eine Polymerschicht 3 mit einer Dicke von 15 µm bis 250 µm aufgebracht, die aus Polyanilin oder Polypyrrol besteht. Um Verkrümmungen des mit dem Overlay 1, der Dekorschicht 2 und der Polymerschicht 3 beschichteten Paneels zu vermeiden, ist auf der Unterseite des Kerns 4 eine als Gegenzug dienende Unterschicht 6 aus Papier aufgebracht. Der Kern 4 und die Papierschichten 2, 5 sowie das Overlay 1 werden in einer Kurztaktpresse bei einem Druck zwischen 20 und 30 bar und einer Presszeit zwischen 12 und 30 Sekunden verpresst. Die Presstemperatur beträgt an der Oberfläche des Overlays 1 bzw. der Unterschicht 5 zwischen 140°C und 210°C.

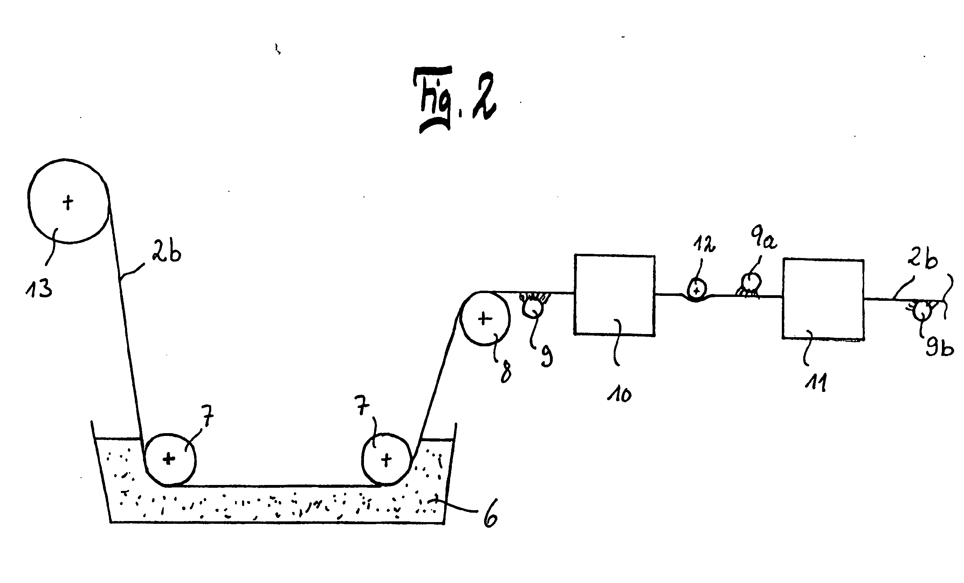

Figur 2 verdeutlicht schematisch wie die Polymerschicht 3 auf die Dekorschicht 2 aufgebracht wird. Die Papierbahn 2b wird von einer Rolle 13 endlos durch ein mit Melamin-oder Harnstoff harz gefülltes Becken 6 geführt und dort beschichtet (beharzt). Hierzu sind im Becken 6 Umlenkrollen 7 angeordnet. Die so beschichtete Papierbahn 2b wird weiter über eine Umlenkrolle 8 geführt und läuft in einen Vörtrockner 10 ein. Vor dem Vortrockner 10 ist zu der Unterseite der Papierbahn 2b gerichtet eine Walze oder ein Zentrifugalzerstäuber 9 angeordnet, über den polymeres Material, vorzugsweise Polyanilin oder Polypurol auf die Unterseite der Papierbahn 2b aufgewalzt oder aufgesprüht wird. Die Papierbahn 2b läuft aus dem Vortrockner 10 heraus und wird einem Nachtrockner 11 zugeführt, damit eine vollständige Trockung erfolgt. Nachdem die Papierbahn 2b aus dem Nachtrockner heraus läuft, wird sie in die gewünschte Größe zerschnitten. Zwischen dem Vortrockner 10 und dem Nachtrockner 11 ist eine Spannrolle 12 vorgesehen.

Die Beschichtung der Papierbahn 2b mit dem Polymer kann auch zwischen dem Vortrockner 10 und dem Nachtrockner 11 erfolgen. Zur Verdeutlichung ist in der Figur mit der Positionsziffer 9a eine Walze bzw. ein Zentrifugalzerstäuber dargestellt, der alternativ oder auch kumulativ vorgesehen sein kann. Die Papierbahn 2b kann auf der Unterseite und/oder auf der Oberseite mit der Polymerschicht versehen werden. Denkbar ist es auch, erst die bereits geschnittenen Papierbögen entsprechend zu beschichten. Dies ist in der Figur mit der Positionsziffer 9b angedeutet. In diesem Fall kann die Beschichtung dann nicht im Durchfluss erfolgen.

Die Schichtdicke des Polymers beträgt zwischen 15 *µ*m und 250 *µ*m. Sehr vorteilhaft ist es, wenn eine Schichtdicke zwischen 30 *µ*m und 80*µ*m eingestellt wird. Das entsprechend beschichtete und geschnittene Dekorpapier kann anschließend in herkömmlicher Weise bei der Paneelherstellung verwendet werden.

### Bezugszeichenliste

- 1: Overlay
- 2: Dekorschicht
- 2b: Papierbahn
- 3: Polymerschicht
- 4: Kern
- 5: Unterschicht/Gegenzug
- 6: Becken
- 7: Umlenkrolle
- 8: Umlenkrolle
- 9: Walze/Zentrifugalzerstäuber
- 9a: Walze/Zentrifugalzerstäuber
- 9b: Walze/Zentrifugalzerstäuber
- 10: Vortrockner
- 11: Nachtrockner
- 12: Spannrolle
- 13: Papierrolle

## Patentansprüche

1. Bodenpaneel mit einem Kern (4) aus Holzwerkstoff, insbesondere HDF, einer auf der Oberseite des Kerns (4) aufgebrachten Dekorschicht (2) aus Papier und einem die Dekorschicht (2) abdeckenden Overlay (1) sowie einer auf der Unterseite des Kerns (4) als Gegenzug aufgebrachten Unterschicht (5), **dadurch gekennzeichnet, dass** auf die Dekorschicht (2) eine Schicht (3) aus Polyanilin oder Polypyrrol als Antistatikum aufgebracht ist.

2. Bodenpaneel nach Anspruch 1, **dadurch gekennzeichnet, dass** die Polymerschicht (3) auf der Unterseite der Dekorschicht (2) aufgebracht ist.

3. Bodenpaneel nach einem oder mehreren der vorstehenden Ansprüche, **dadurch gekennzeichnet, dass** die Polymerschicht (3) eine Dicke zwischen 15 µm und 250 µm aufweist.

4. Bodenpaneel nach Anspruch 3, **dadurch gekennzeichnet, dass** die Polymerschicht (3) eine Dicke zwischen 30 µm und 80 µm aufweist.

5. Verfahren zur Beschichtung eines Dekorpapiers (2b) mit Polyanilin oder Polypyrrol zur Verwendung für ein Bodenpaneel nach einem der Ansprüche 1 bis 4, wobei das Dekorpapier (2b) als Bahn im Durchlauf durch ein Becken (6) mit Melamin- oder Harnstoff harz beschichtet wird, daran anschließend einen Vortrockner (10) und einen Nachtrockner (11) durchläuft und abschließend geschnitten wird, **dadurch gekennzeichnet, dass** auf die Bahn Dekorpapier (2b) nach der Beschichtung mit Melamin oder Kunstharz und vor dem Einlauf in den Vortrockner (10) das Polymer durch Walzen oder Sprühen aufgetragen wird.

6. Verfahren zur Beschichtung eines Dekorpapiers (2b) mit Polyanilin oder Polypyrrol zur Verwendung für ein Bodenpaneel nach einem der Ansprüche 1 bis 4, wobei das Dekorpapier (2b) als Bahn im Durchlauf durch ein Becken (6) mit Melamin- oder Harnstoff harz beschichtet wird, daran anschließend einen Vortrockner (10) und einen Nachtrockner (11) durchläuft und abschließend geschnitten wird, **dadurch gekennzeichnet, dass** auf die Bahn Dekorpapier (2b) nach dem Auslauf aus den Vortrockner (10) und vor dem Einlauf in den Nachtrockner (11) das Polymer durch Walzen oder Sprühen aufgetragen wird.

## Claims

1. Floor panel having a core (4) made of wooden material, in particular HDF, a decorative layer (2) made of paper applied to the top side of the core (4) and an overlay (1) covering the decorative layer (2), and a bottom layer (5) applied to the underside of the core (4) as a backing, **characterized in that** a layer (3) of polyaniline or polypyrrol is applied to the decorative layer (2) as an antistatic.

2. Floor panel according to Claim 1, **characterized in that** the polymer layer (3) is applied to the underside of the decorative layer (2).

3. Floor panel according to one or more of the preceding claims, **characterized in that** the polymer layer (3) has a thickness between 15 µm and 250 µm.

4. Floor panel according to Claim 3, **characterized in that** the polymer layer (3) has a thickness between 30 µm and 80 µm.

5. Method for coating a decorative paper (2b) with polyaniline or polypyrrol for use for a floor panel according to one of Claims 1 to 4, the decorative paper (2b) being coated with melamine or urea resin as a web as it passes through a bath (6), then passes through a pre-dryer (10) and an after-dryer (11) and is finally cut, **characterized in that**, after the coating with melamine or synthetic resin and before running into the pre-dryer (10), the polymer is applied to the web of decorative paper (2b) by rolling or spraying.

6. Method for coating a decorative paper (2b) with polyaniline or polypyrrol for use for a floor panel according to one of Claims 1 to 4, the decorative paper (2b) being coated with melamine or urea resin as a web as it passes through a bath (6), then passes through a pre-dryer (10) and an after-dryer (11) and is finally cut, **characterized in that**, after running out of the pre-dryer (10) and before running into the after-dryer (11), the polymer is applied to the web of decorative paper (2b) by rolling or spraying.

## Revendications

1. Panneau de plancher comprenant une âme (4) en matériau bois, en particulier une plaque de fibres fortement compressée, une couche décorative (2) en papier apposée sur le dessus de l'âme (4), et un revêtement (1) recouvrant la couche décorative (2), ainsi qu'une couche inférieure (5) apposée sur le dessous de l'âme (4) en tant que contre-traction, **caractérisé en ce qu'**une couche (3) en polyaniline ou polypyrrol est appliquée sur la couche décorative (2) en tant qu'antistatique.

2. Panneau de plancher selon la revendication 1, **caractérisé en ce que** la couche polymère (3) est appliquée sur le dessous de la couche décorative (2).

3. Panneau de plancher selon une ou plusieurs des revendications précédentes, **caractérisé en ce que** la couche polymère (3) présente une épaisseur comprise entre 15 *µm* et 250 *µm.*

4. Panneau de plancher selon la revendication 3, **caractérisé en ce que** la couche polymère (3) présente une épaisseur comprise entre 30 *µm* et 80*µm.*

5. Procédé pour enduire de polyaniline ou polypyrrol un papier décoratif (2b) en vue de l'utiliser pour un panneau de plancher selon l'une des revendications 1 à 4, dans lequel on enduit de résine mélanine ou résine urée le papier décoratif (2b) lors de son passage en bande à travers un bassin (6), le papier décoratif traverse ensuite un pré-sécheur (10) et un post-sécheur (11) puis est découpé, **caractérisé en ce qu'**on applique le polymère sur la bande de papier décoratif (2b) par rouleau ou pulvérisation après l'enduction de mélanine ou résine synthétique et avant l'entrée dans le pré-sécheur.

6. Procédé pour enduire de polyaniline ou polypyrrol un papier décoratif (2b) en vue de l'utiliser pour un panneau de plancher selon l'une des revendications 1 à 4, dans lequel on enduit de résine mélanine ou résine urée le papier décoratif (2b) lors de son passage en bande à travers un bassin (6), le papier décoratif traverse ensuite un pré-sécheur (10) et un post-sécheur (11) puis est découpé, **caractérisé en ce qu'**on applique le polymère sur la bande de papier décoratif (2b) par rouleau ou pulvérisation après la sortie du pré-sécheur (10) et avant l'entrée dans le post sécheur (11).
